# EUROPÄISCHE PATENTANMELDUNG

(11) **EP 1 566 401 A2**
(43) Veröffentlichungstag der Anmeldung: **24.08.2005**
(21) Anmeldenummer: 05000453.0
(22) Anmeldetag: 12.01.2005
(51) Int. Cl.: C08K 3/00, C08L 33/06, C08L 23/06, C08L 23/12, C08L 29/04, C08L 25/06, C08L 53/02, C08G 69/02, C08K 5/10

(54) **Plastische Masse zum Kneten, Modellieren und Dekorieren sowie Verfahren zu deren Herstellung**

(30) Priorität: 20.02.2004 DE 102004009777
(71) Anmelder: J.S. Staedtler GmbH & Co KG, 90427 Nürnberg (DE)
(72) Erfinder: Freese, Yvette, 93047 Regensburg (DE); Pabst, Gunther, Dr., 92318 Neumarkt (DE); Schnorrer, Heinrich, 92421 Schwandorf (DE)

(57) **Zusammenfassung**

Die Erfindung betrifft eine plastische Masse zum Kneten, Modellieren, Basteln und Dekorieren, im wesentlichen bestehend aus Bindemitteln, Weichmachern und Füllstoffen sowie gegebenenfalls Farbmitteln und/oder sonstigen Zusätzen, wobei das Bindemittel ein Plastisol aus PVCfreiem Kunststoffpulver und Weichmacher ist, wobei ein Anteil von mindestens 50 Gew.% der Kunststoffpartikel eine Partikelgröße kleiner 250 µm aufweist.
Desweiteren betrifft die Erfindung das Verfahren zur Herstellung einer derartigen plastischen Masse.

## Beschreibung

Die Erfindung betrifft plastische Massen zum Kneten, Modellieren, Basteln und Dekorieren gemäß Hauptanspruch sowie Verfahren zu deren Herstellung.
Verwendet werden können diese Massen insbesondere zum Herstellen von Figuren und sonstigen plastischen Darstellungen, von Modellkörpern und Formen hierfür, von Schmuckstücken, Bildern und sonstigen kunstgewerblichen Gegenständen, als Aufnahmen für Blumen, Kerzen und sonstige dekorative Gegenstände sowie ggf. auch als therapeutische Knetmasse, beispielsweise für motorische Übungen mit den Händen.
Es handelt sich somit insbesondere um dauerplastische oder härtbare Modellier- und Bastelmassen, um Form- und Modellbaumassen, um Steckmassen für Blumen und sonstige dekorative Gegenstände sowie um Knetmassen schlechthin für die unterschiedlichsten Anwendungsgebiete.

Eine derartige plastische Masse ist beispielsweise aus **DE-PS 24 24 451** bekannt.
Diese i. d. R. von Hand verformbare, bei Raumtemperatur plastische und langzeitig dauerelastisch bleibende Masse ergibt keine Produkte, die langzeitig haltbar bzw. dauerhaft aushärtbar sind.

Demgegenüber kennt man aus **DE-OS 25 25 757** und aus **DE-PS 29 37 843** grundsätzlich gattungsgleiche plastische Massen, die Polyvinylchlorid (PVC) als Bindemittel enthalten und die bei erhöhter Temperatur, beispielsweise bei ca. 110 - 130°C, härtbare Produkte ergeben.
Von Nachteil ist bei diesen bekannten Massen, dass das ursprünglich i. d. R. als Plastisol vorliegende PVC thermisch relativ instabil ist und bei einer Erhitzung auf über 180°C bzw. bei einer Verbrennung, Chlorwasserstoff (HCl) abspaltet, wodurch sich Reizungen der Schleimhäute und Korrosion an Metallteilen ergeben können.
Darüber hinaus sind derartige Massen meist nicht langzeitig UV- und witterungsbeständig.

Weiter ist eine PVC-Freie plastische Masse aus **DE 40 08 980 C2** bekannt. Nachteilig ist hierbei, dass sich damit keine qualitativ hochwertigen Knet- und Modelliermassen herstellen lassen.

Aufgabe der vorliegenden Erfindung ist es daher hochqualitative PVC-Freien gelierbare Knet- und Modelliermassen zu entwickeln, die die eingangs genannten Nachteile nicht aufweisen.

Diese Aufgabe wird mit den kennzeichnenden Merkmalen des Anspruchs 1 auf einfache Weise gelöst.
Bevorzugte Ausführungen, Weiterbildungen und Herstellungsverfahren sind in den Unter- und Nebenansprüchen umfasst.

Überraschenderweise zeigte sich, dass die Qualität der gelierbaren Knet- und Modelliermasse stark von der Partikelgrößenverteilung des Kunststoffpulvers abhängt. Es hat sich gezeigt, dass je kleiner die Partikelgrößenverteilung des Kunststoffpulvers, umso qualitativ höher sind die damit hergestellten gelierbaren Knet- und Modelliermassen.

Des weiteren hat sich überraschenderweise gezeigt, dass neben PAMA auch andere PVC-freien Kunststoffe für gelierbare Knet- und Modelliermassen geeignet sind.

Erfindungsgemäß soll die plastische Masse zum Kneten, Modellieren, Basteln und Dekorieren als Bindemittel einen PVC-freien Kunststoff, vorzugsweise PAMA, Polyethylen, Polypropylen, Polyvinylalkohol, Polyvinylacetat, Polyamid, Copolymeres Styrol, und/oder terpolymeres SEBS und Weichmacher enthalten.

Anhand einiger Ausführungsbeispiele wird die Erfindung nachfolgend näher beschrieben.

### Rahmenbeispiel :

| | |
|---|---|
| 25 - 70 Gew.-% | Kunststoffpulver |
| 10 - 40 Gew.-% | Weichmacher |
| 0 - 50 Gew.-% | Füllstoff |
| 0 - 15 Gew.-% | Farbmittel |
| 0 - 20 Gew.-% | Gleitmittel und/oder sonstige Zusätze |

### Beispiel 1 :

| | |
|---|---|
| 60 Gew.-% | Polyethylen (PE) |
| 30 Gew.-% | Diisononylphthalat (Weichmacher) |
| 5 Gew.-% | Calciumstearat (Gleitmittel) |
| 4,8 Gew.-% | amorphe Kieselsäure (Füllstoff) |
| 0,2 Gew.-% | Pigment (Farbmittel) |

### Beispiel 2 :

| | |
|---|---|
| 69 Gew.-% | Polypropylen |
| 27 Gew.-% | Di-n-(C6-C10)-alkylphthalat (Weichmacher) |
| 3,5 Gew.-% | expandierte Microhohlkugeln (Füllstoff) |
| 0,5 Gew.-% | Pigment (Farbmittel) |

### Beispiel 3:

| | |
|---|---|
| 50 Gew.-% | Polystyrol (PS) |
| 25 Gew.-% | Di-n-(C8-C12)-alkylphthtalat(Weichmacher) |
| 23 Gew.-% | Kaolin (Füllstoff) |
| 1 Gew. % | Calciumstearat (Gleitmittel) |
| 1 Gew.-% | Pigment (Farbmittel) |

### Beispiel 4:

| | |
|---|---|
| 65 Gew.% | Styrol-Butadien-Styrol (SBS) |
| 28 Gew.% | Acetyltributylcitrat (Weichmacher) |
| 6,7 Gew.% | Talkum (Füllstoff) |
| 0,3 Gew.% | Pigment (Färbemittel) |

### Beispiel 5:

| | |
|---|---|
| 45 Gew.-% | Polyamid (PA) |
| 22 Gew.-% | Alkylsulfonsäureester (C12-C20) des Phenols (Weichmacher) |
| 2,5 Gew.-% | Calciumstearat (Gleitmittel) |
| 30 Gew.-% | Calciumcarbonat (Füllstoff) |
| 0,5 Gew.-% | Farbmittel (Pigment oder Farbstoff) |

### Beispiel 6:

| | |
|---|---|
| 46 Gew.-% | Polymethylmethacrylat (PMMA) |
| 32 Gew.-% | 2,2,4-Trimethyl-1,3-pentandioldibenzoat |
| 21,5 Gew.-% | Microglashohlkugeln |
| 0,5 Gew.-% | Pigment |

### Beispiel 7:

| | |
|---|---|
| 42 Gew.% | Styrol-Ethylen-Butadien-Styrol (SEBS) |
| 21 Gew.% | Tri-(2-ethylhexyl)-acetylcitrat (Weichmacher) |
| 18 Gew.% | Aluminiumhydroxid (Füllstoff) |
| 15 Gew.% | Zinkstearat (Gleitmittel) |
| 4 Gew.% | Pigment (Färbemittel) |

### Beispiel 8:

| | |
|---|---|
| 17 Gew.% | Styrol-Ethylen-Butadien-Styrol (SEBS) |
| 20 Gew.% | Polyethylen (PE) |
| 13 Gew.% | Polystyrol (PS) |
| 21 Gew.% | 2,2,4-Trimethyl-1,3-pentandioldibenzoat (Weichmacher) |
| 10 Gew.% | Aluminiumhydroxid (Füllstoff) |
| 15 Gew.% | Zinkstearat (Gleitmittel) |
| 4 Gew.% | Pigment (Färbemittel) |

Die plastische Masse bestehend im wesentlichen aus Bindemitteln, Weichmachern und Füllstoffen sowie gegebenenfalls Farbmitteln und/oder sonstigen Zusätzen. Das Bindemittel ist ein Plastisol aus PVC-freiem Kunststoffpulver und Weichmacher, wobei ein Anteil von mindestens 50 Gew.% der Kunststoffpartikel eine Partikelgröße kleiner 250 µm aufweist.
Vorzugsweise weist ein Anteil von mindestens 50 Gew.% des Kunststoffpulvers eine Partikelgröße kleiner 100 µm oder gar eine Partikelgröße kleiner 20 µm auf.
Weist das Bindemittel beispielsweise einen Anteil von 70 oder gar 90 Gew.% an Kunststoffpartikeln der genannten Partikelgrößen 250, 100 oder 20 µm auf, so wird die damit hergestellte Masse qualitativ hochwertiger.
Das Bindemittel ist ein Plastisol auch Kunststoffpartikeln und Weichmacher, wobei der Kunststoffanteil aus Polyacrylmethacrylatpartikeln, Polyethylenpartikeln, Polypropylenpartikeln, Polyvinylacetatpartikeln, Polyvinylalkoholpartikeln, Polyamidpartikeln, Polystyrolpartikeln, und /oder Styrol-Butadien-Styrol-Copolymer besteht.

Der Weichmacher ist ein Di-(2-ethylhexyl)-phthalat und/oder ein Di-n-(C6-C10)-alkylphthalat, ein Di-n-(C8-C11)-alkylphthalat, ein Diisononyphthalat und/oder ein Alkysulfonsäureester (C12-C20) des Phenols.
Weitere Beispiele für Weichmacher sind 2,2,4-Trimethyl-1,3-pentandioldibenzoat, 1,2-Cyclohexandicarbonsäure, isononylester, Acetyltributylcitrat und/oder Tri-(2-ethylhexyl)-acetylcitrat.
Gemische der vorstehenden Weichmacher sind problemlos möglich.

Alternativ zu den herkömmlichen und oben genannten Weichmachern kann der Weichmacher ein natives, mineralisches und/oder synthetisches Fett, ein Öl wie z.B. Raps-, Soja- und/oder Leinöl, ein paraffinisches Öl oder ein Gemisch derartiger Substanzen sein.

Beispiele für einsetzbare Pigmente sind Pigment Blue 15 und Pigment Yellow 3. Als Farbstoffe können beispielhaft Acid Red 18 (E 124) und Food Yellow 3 (E 110) genannt werden.

Die Herstellung erfindungsgemäßer plastischer Massen kann mit üblichen Vorrichtungen, insbesondere mit herkömmlichen Mischern, bevorzugt unter Vakuum, erfolgen, wobei vorteilhafterweise zunächst ein Plastisol aus feinkörnigem Kunststoffpulver und Weichmacher gebildet wird und diesem Plastisol dann die Füllstoffe sowie ggf. Gleitmittel, Farbmittel und/oder sonstige Zusätze beigemischt werden. In das Kunststoff-Plastisol werden nachfolgend die übrigen Komponenten unter Berücksichtigung der gewünschten Konsistenz eingemischt.

Alternativ hierzu kann aber auch zunächst eine Mischung aller trockenen Komponenten, also des Kunststoff-Pulvers, des Füllstoffs und ggf. weiterer fester Bestandteile, wie z. B. eines Gleitmittels und/oder der Farbmittel, hergestellt werden, der dann der Weichmacher und ggf. weiterer flüssiger Bestandteile unter inniger Vermischung, vorzugsweise unter Vakuum, bis zur Erzielung einer homogenen plastischen Masse, zugegeben wird.

Alternativ kann auch eine Mischung aller Komponenten, also des Kunststoff-Pulvers, des Füllstoffs, des Weichmachers und ggf. weiterer flüssiger oder fester Bestandteile, wie z.B. eines Gleitmittels und/oder Farbmittel, vorzugsweise unter Vakuum, hergestellt werden.

Die Formgebung der gemischten Massen erfolgt durch Extrusion oder durch Extrusion unter Vakuum.

## Patentansprüche

1. Plastische Masse zum Kneten, Modellieren, Basteln und Dekorieren, bestehend aus Bindemitteln, Weichmachern und Füllstoffen sowie gegebenenfalls Farbmitteln und/oder sonstigen Zusätzen,
**dadurch gekennzeichnet,**
**dass** das Bindemittel ein Plastisol aus PVC-freiem Kunststoffpulver und Weichmacher ist
und **dass** ein Anteil von mindestens 50 Gew.% der Kunststoffpartikel eine Partikelgröße kleiner 250 µm aufweist.

2. Plastische Masse nach Anspruch 1,
**dadurch gekennzeichnet,**
**dass** das Bindemittel ein Plastisol aus PVC-freiem Kunststoffpulver und Weichmacher ist
und **dass** ein Anteil von mindestens 50 Gew.% des Kunststoffpulvers eine Partikelgröße kleiner 100 µm aufweist.

3. Plastische Masse nach Anspruch 1 oder 2,
**dadurch gekennzeichnet,**
**dass** 50 Gew.% des Kunststoffpulvers eine Partikelgröße kleiner 20 µm aufweist.

4. Plastische Masse nach Anspruch 1 bis 3,
**dadurch gekennzeichnet,**
**dass** das Bindemittel ein Plastisol aus Polyacrylmethacrylatpartikeln und Weichmachern ist.

5. Plastische Masse nach Anspruch 1 bis 3,
**dadurch gekennzeichnet,**
**dass** das Bindemittel ein Plastisol aus Polyethylenpartikeln und Weichmachern ist.

6. Plastische Masse nach Anspruch 1 bis 3,
**dadurch gekennzeichnet,**
**dass** das Bindemittel ein Plastisol aus Polypropylenpartikeln und Weichmachern ist.

7. Plastische Masse nach Anspruch 1 bis 3,
**dadurch gekennzeichnet,**
**dass** das Bindemittel ein Plastisol aus Polyvinylacetatpartikeln und Weichmachern ist.

8. Plastische Masse nach Anspruch 1 bis 3,
**dadurch gekennzeichnet,**
**dass** das Bindemittel ein Plastisol aus Polyvinylalkoholpartikeln und Weichmachern ist.

9. Plastische Masse nach Anspruch 1 bis 3,
**dadurch gekennzeichnet,**
**dass** das Bindemittel ein Plastisol aus Polyamidpartikeln und Weichmachern ist.

10. Plastische Masse nach Anspruch 1,
**dadurch gekennzeichnet,**
**dass** das Bindemittel ein Plastisol aus Polystyrolpartikeln und Weichmachern ist.

11. Plastische Masse nach Anspruch 1 bis 3,
**dadurch gekennzeichnet,**
**dass** das Bindemittel ein Plastisol aus Styrol-Butadien-Styrol-Copolymer und Weichmachern ist.

12. Plastische Masse nach Anspruch 1 bis 3,
**dadurch gekennzeichnet,**
**dass** das Bindemittel ein Plastisol aus terpolymere SEBS-Partikeln und Weichmachern ist.

13. Plastische Masse nach einem oder mehreren der Ansprüche 1 bis 12,
**dadurch gekennzeichnet,**
**dass** das Bindemittel ein Plastisol ist
und **dass** das Bindemittel eine Kombination mindestens zweier der in Anspruch 4 bis 12 genannten Kunststoffe aufweist.

14. Plastische Masse nach einem oder mehreren der vorhergehenden Ansprüche,
**dadurch gekennzeichnet,**
**dass** der Weichmacher ein Di-(2-ethylhexyl)-phthalat und/oder ein Di-n-(C6-C10)-alkylphthalat ist.

15. Plastische Masse nach einem oder mehreren der vorhergehenden Ansprüche,
**dadurch gekennzeichnet,**
**dass** der Weichmacher ein Di-n-(C8-C11)-alkylphthalat ist.

16. Plastische Masse nach einem oder mehreren der vorhergehenden Ansprüche,
**dadurch gekennzeichnet,**
**dass** der Weichmacher ein Diisononyphthalat und/oder ein Alkysulfonsäureester (C12-C20) des Phenols ist.

17. Plastische Masse nach einem oder mehreren der vorstehenden Ansprüche,
**dadurch gekennzeichnet,**
**dass** der Weichmacher 2,2,4-Trimethyl-1,3-pentandioldibenzoat ist.

18. Plastische Masse nach einem oder mehreren der vorstehenden Ansprüche,
**dadurch gekennzeichnet,**
**dass** der Weichmacher 1,2-Cyclohexandicarbonsäure, isononylester ist.

19. Plastische Masse nach einem oder mehreren der vorstehenden Ansprüche,
**dadurch gekennzeichnet,**
**dass** der Weichmacher Acetyltributylcitrat ist.

20. Plastische Masse nach einem oder mehreren der vorstehenden Ansprüche,
**dadurch gekennzeichnet,**
**dass** der Weichmacher Tri-(2-ethylhexyl)-acetylcitrat ist.

21. Plastische Masse nach einem oder mehreren der vorstehenden Ansprüche,
**dadurch gekennzeichnet,**
**dass** der Weichmacher ein natives, mineralisches und/oder synthetisches Fett, ein Öl wie z.B. Raps-, Soja- und/oder Leinöl, ein paraffinisches Öl oder ein Gemisch derartiger Substanzen ist.

22. Plastische Masse nach einem oder mehreren der vorhergehenden Ansprüche,
**dadurch gekennzeichnet,**
**dass** sie
| | |
|---|---|
| a) | 25 - 70 Gew.-% Kunststoffpulver, |
| b) | 10 - 40 Gew.-% Weichmacher, |
| c) | 0 - 50 Gew.-% Füllstoff, |
| d) | 0 - 15 Gew.-% Farbmittel |
| e) | 0 - 20 Gew.-% Gleitmittel und/oder sonstige Zusätze |
| | enthält. |

23. Verfahren zur Herstellung einer plastischen Masse gemäß einem oder mehreren der vorhergehenden Ansprüche,
**dadurch gekennzeichnet,**
**dass** zunächst ein Plastisol aus feinkörnigem Kunststoffpulver und Weichmacher gebildet wird und dass diesem Plastisol dann die Füllstoffe sowie ggf. Gleitmittel, Farbmittel und/oder sonstige Zusätze beigemischt werden.

24. Verfahren zur Herstellung einer plastischen Masse gemäß einem oder mehreren der vorhergehenden Ansprüche,
**dadurch gekennzeichnet,**
**dass** zunächst eine Mischung aller trockenen Komponenten, also des Kunststoff-Pulvers, des Füllstoffs und ggf. weiterer fester Bestandteile, wie z. B. eines Gleitmittels und/oder der Farbmittel der dann der Weichmacher und ggf. weiterer flüssiger Bestandteile unter inniger Vermischung, bis zur Erzielung einer homogenen plastischen Masse, zugegeben wird.

25. Verfahren zur Herstellung einer plastischen Masse gemäß einem oder mehreren der vorhergehenden Ansprüche,
**dadurch gekennzeichnet,**
**dass** eine Mischung aller Komponenten, also des Kunststoff-Pulvers, des Füllstoffs, des Weichmachers und ggf. weiterer flüssiger oder fester Bestandteile, wie z.B. eines Gleitmittels und/oder Farbmittel, hergestellt werden.

26. Verfahren zur Herstellung einer plastischen Masse gemäß einem oder mehreren Ansprüche,
**dadurch gekennzeichnet,**
**dass** die Mischung unter Vakuum erfolgt.

27. Verfahren zur Herstellung einer plastischen Masse gemäß einem oder mehreren der vorhergehenden Ansprüche,
**dadurch gekennzeichnet,**
**dass** die Formgebung der gemischten Massen durch Extrusion erfolgt.

28. Verfahren zur Herstellung einer plastischen Masse gemäß einem oder mehreren der vorhergehenden Ansprüche,
**dadurch gekennzeichnet,**
**dass** die Formgebung der gemischten Massen durch Extrusion unter Vakuum erfolgt.
